# EUROPEAN PATENT SPECIFICATION

(11) **EP 2 759 610 B1**
(45) Date of publication and mention of the grant of the patent: **04.01.2017**
(21) Application number: 13152731.9
(22) Date of filing: 25.01.2013
(51) Int. Cl.: C22B 3/00, C22B 3/44

(54) **Process for the recovery of iron as hematite and other metallic values from a sulphate leach solution**
Verfahren zur Rückgewinnung von Eisen als Hämatit und anderen metallischen Werten aus einer Sulfatlaugenlösung
Procédé de récupération de fer sous forme d'hématite et d'autres valeurs métalliques à partir d'une solution de lixiviation de sulfate

(43) Date of publication of application: 30.07.2014
(73) Proprietor: Canbekte, Hüsnü Sinan, 34430 Istanbul (TK)
(72) Inventor: Canbekte, Zekeriya, 34430 ISTANBUL (TR)
(74) Representative: Goddar, Heinz J.

(56) References cited:
- WO-A1-2007/079532
- WO-A1-2009/155651

## Description

### Technical field of the invention

The present invention relates to a process for the recovery of iron as hematite and other metallic values from a sulphate leach solution.

### Background of the invention

Leaching of metal bearing materials with sulphuric acid is widely applied process. Iron removal from the leach solution is important for the recovery of other metals and for process economics. Iron is normally removed from the solution as jarosite, goethite or hematite but none of them result in a usable iron product. Jarosite and goethite produced as such are discarded as waste with no economic value. For hematite production, iron precipitation should be carried out in an autoclave at temperatures of over 200 °C and oxygen pressure of 18 bars or over.

Iron is also precipitated out of the leach solution as hydroxide by precipitation with a suitable pH adjuster such as lime, magnesium hydroxide, caustic or ammonia etc. Iron hydroxide precipitated in this way presents difficulties in filtering, and an unacceptable amount of metallic values is lost in the filter cake.

A great deal of research has been conducted in iron precipitation as hematite that can be used in industry. U.S. patent 7.294.319 describes a method for precipitating iron from zinc sulphate solution as hematite under atmospheric conditions. Similarly, WO2007/079532 describes a hydrometallurgical method for precipitating iron in the form of hematite from leach solutions containing nickel, cobalt and iron.

The Article 'Uniform Particles with a large surface area formed by hydrolysis of Fe2(SO4)3 with Urea' published in 1999 in Materials Research Bulletin Vol 34 No 6 pp 905-919 describes hydrolysis of iron oxide from a solution of Fe2(SO4)3/Urea mixture under various conditions. The article indicates that slow hydrolysis of aqueous solutions of Fe2(SO4)3 with Urea in the temperature range 60-100 °C leads to a characteristic form of iron (III) hydrous oxides and basic sulfates. Thermal dehydration of this iron (III) hydrous oxides yields amorphous Fe2O3.

WO 2009/155651 A1 discloses a process for the treatment of a solution containing at least ferric ions and one or more other metal values, wherein the iron is precipitated as a relatively crystalline iron hydroxide or oxide.

### Summary of the invention

The object of the invention is to provide a method for efficient recovery of iron as a usable iron oxide product such as hematite from a Fe2(SO4)3 solution containing other metal sulphates resulting from leaching of metal bearing materials with sulphuric acid.

This object is achieved in accordance with the present invention by providing a method in which iron can be recovered from ferric sulphate solutions, obtained from leaching of metal bearing materials with sulphuric acid, in the form of an oxide as a useful product by precipitation as hydroxide and by subsequent pressure oxidation followed by calcining of iron hydroxide, as defined in appended patent claim 1.

During the work leading to the present invention it was found possible to recover iron under atmospheric conditions from a Fe2(SO4)3 leach solution containing nickel and cobalt sulphates.

The advantages with the method according to the invention is that the method can be performed at atmospheric or low pressure and at temperatures ranging from 60 °C to 140 °C, that no gases are emitted, and that due to short residence time, simple and inexpensive equipment can be used to perform the method so that iron can be recovered as a usable product.

Thus, the present invention basically relates to a process involving the recovery of dissolved iron as iron oxide.

The method can be applied to ferric sulphate solutions which contain dissolved metals such as nickel and/or cobalt and/or zinc and/or copper and/or similar other metals that are normally soluble in sulphuric acid.

Additional features and advantages of various embodiments of the invention will become evident from the following detailed description and the appended claims.

### Detailed description of the invention

The term 'metal' used herein and in the appended claims encompasses nickel, cobalt and any other metals that are normally soluble in sulphuric acid.

Subsequent steps a) through m) describe a specific embodiment of the method in accordance with the invention. As will be noted by a skilled person, not all of said steps are required in connection with the present invention, which is defined by the appended claims.
a) Magnesium hydroxide solution (10%-15%) is added to a sulphate leach solution with pH as low as 0.5 containing iron and other metal sulphates in order to raise the pH to around 1.8.
b) The new leach solution with a pH of about 1.8 is then added into a magnesium hydroxide solution (10%-15%) with a pH of 10.5 in order to bring the final pH of the sulphate leach solution to around 3.5. With the increase in pH, iron precipitates out of the solution as hydroxide.
c) This 'shock rise in pH' as in step b) above helps to eliminate gel-type formation of iron hydroxide and thus makes filtering much easier. This also helps reduce metallic values contained in the iron hydroxide precipitate.
d) Following solid/liquid separation by thickening, the overflow solution now containing most of the metallic values except iron is treated further to precipitate other metallic values using any one of known precipitation methods such as by pH regulation, by sulphidation etc.
e) The underflow from the thickener containing mainly iron as hydroxide and also an unnegligible amount of other metallic values is then treated in a pressurized vessel at a pressure of 2-3 bars and temperature of 120-135 °C for about minimum 20 minutes. This treatment in a pressure vessel helps break up hydroxide gel, and consequently any encapsulated sulphate ions and metallic values become liberated. The pH of the slurry drops to about 1.8 from the starting value of pH 3.5 indicating the release of any sulphuric acid associated with iron.
f) The slurry from the pressure vessel is filtered easily. A proper flocculant may further ease the filtration.
g) The filter cake is thoroughly washed with water to minimize any soluble metallic values remaining in the cake.
h) The filter cake, which is now nearly free of other metallic values such as nickel, cobalt, zinc, copper etc, but containing still some amounts of metallic values such as aluminium, chromium, manganese etc, is then calcined at a temperature of around 250 °C. During calcining, free moisture is removed and then iron hydroxide is converted to hematite, Fe203, which constitutes a saleable product.
i) The filtrate and the washing waters containing metallic values are either (re-)used in the process where required or subjected to metal precipitation.
j) Metallic values remaining in the solution such as nickel, cobalt, zinc, copper etc. are precipitated as hydroxides using ammonium hydroxide separately by pH adjustment at various pH levels corresponding to each individual metal.
k) Metal hydroxide precipitates are separated by filtration for further use or treatment. The filtrate which now contains mainly magnesium sulphate and ammonium sulphate can be treated further with ammonium hydroxide to precipitate magnesium hydroxide.
l) Following solid/liquid separation by thickening, the overflow containing now mainly ammonium sulphate will be treated with lime to convert ammonium sulphate to ammonia gas and to convert sulphate to gypsum, while the underflow from the thickener which contains mainly magnesium hydroxide is recycled to be (re-)used in the process.
m) Gypsum can be separated by filtration and discarded while the ammonia can be emitted in gaseous form. This gas can be converted to ammonium hydroxide in an absorption column to be reused in the process.

Practically, the method is advantageously performed in vessels made from stainless steels or mild steel or concrete tanks which can be lined with proper protective lining.

The invention will now be further explained in the following working example. This example is only intended to illustrate a specific embodiment of the invention and should in no way be considered as limiting the scope of the invention.

### Non-limiting example

1. A leach solution obtained from leaching of a nickel laterite ore was used. The pH of the process leach solution (PLS) was 0.5 and contained 42.400 ppm Fe, 2.800 ppm Ni and 140 ppm Co.
2. 3.5 liters of PLS were placed in a beaker, and its pH was slowly adjusted to 1.6 with pre-prepared 10% magnesium hydroxide solution while stirring at atmospheric conditions. No gel formation occurred at this particular pH.
3. In order to avoid gel formation, the solution with pH 1.6 was slowly added into pre-prepared 10% magnesium hydroxide solution while stirring at atmospheric conditions to bring the pH to 3.5. This 'shock pH adjustment' eliminated gel formation opportunity.
4. At this pH, iron was converted to hydroxide and was filtered out of the solution as precipitate. Fe concentration in the filtrate dropped to 113 ppm indicating more than 99 % conversion of Fe to hydroxide. 3.150 ml of filtrate was obtained from the filtration which contained 2.262 ppm Ni and 112 ppm Co indicating 72.5 % recovery of nickel and cobalt into the filtrate while 27.5 % of Ni and Co remained in the iron hydroxide precipitate.
5. The iron hydroxide precipitate was then placed in slurry form in a pressure vessel where it was kept under 2-3 bar pressure and 120-135 °C for about 20 minutes while stirring.
6. After 20 minutes the slurry was discharged from the pressure vessel and filtered with addition of a flocculant. During treatment in the pressure vessel the slurry pH went down from 3.5 to less than 2 indicating the release of or the conversion of SO4 ions to sulphuric acid.
7. The filter cake was analyzed for Fe and Ni and was found to contain 0.52% Ni and 50 % Fe. It was then washed thoroughly with water and filtered. After washing, nickel content in the final filter cake dropped to 0.02% indicating an overall Nickel loss of around 3 % in the process.
8. The filter cake now free of nickel and cobalt but containing 50 % Fe (on dry basis) was heated to 250 °C to convert iron hydroxide to hematite, Fe203. The final iron oxide product contained 57 % Fe.
9. The filtrates from step 4, step 6 and step 7 were treated to raise the pH to initially 4.5 with ammonium hydroxide to precipitate any dissolved aluminum and then to 8.5 to precipitate nickel and cobalt by filtration.
10.The filtrate from step 9 was further treated with ammonium hydroxide to precipitate magnesium hydroxide. This slurry was not filtered, but magnesium hydroxide settled down in the beaker after waiting a short while. This magnesium hydroxide suspension was reused in the process for pH adjustment.
11. The solution free of any suspended solids was siphoned out of the beaker and was further treated with lime. Sulphates in the solution were converted to gypsum which settled down in the reaction beaker. During this period, ammonia gas was emitted. Gypsum residue was discarded.

## Claims

1. A method for recovering iron from ferric sulphate solutions, obtained from leaching of metal bearing materials with sulphuric acid to produce an iron bearing leach solution, in the form of oxide as a useful product by precipitation as hydroxide, by subsequent pressure oxidation, and then by calcining of the iron hydroxide.

2. The method according to claim 1, wherein a pH of the iron bearing leach solution is initially raised, in particular from around as low as 0.5 to 1.8, by addition of 10-15% magnesium hydroxide solution to the iron bearing solution.

3. The method according to claim 2, wherein the pH of the iron bearing solution is raised, in a second stage, in particular to 3.5, by addition of said iron bearing solution, preferably with pH 1.8, into a 10-15 % magnesium hydroxide solution, in particular of pH 10.5, this shock pH adjustment eliminating gel type formation of iron hydroxide and facilitating filtration.

4. The method according to any one of claims 1 to 3, wherein sulphates and other metallic values such as nickel and cobalt remaining in the iron hydroxide precipitate are removed by treating the iron hydroxide precipitate in a pressure vessel in a slurry form, preferably at a pressure of 2-3 bars and a temperature of 120-135 °C for as short as 20 minutes while stirring, optionally followed by filtration and further washing of the filter cake with water.

5. The method according to any one of the claims 1 to 4, further comprising addition of a flocculant to a product of said pressure oxidation in order to facilitate a filtration thereof, in particular to facilitate filtration of the slurry from the pressure vessel according to claim 4.

6. The method according to any one of claims 1 to 5, **characterized in that** it is performed essentially at or slightly above atmospheric pressure.

7. The method according to any one of claims 1 to 6, wherein metallic values contained in the solution are precipitated out of the solution at their relevant pH levels by using ammonium hydroxide as a pH regulator.

8. The method according to any one of claims 1 to 7, wherein magnesium sulphate in the solution is converted to magnesium hydroxide with ammonium hydroxide to be reused in the process.

9. The method according to any one of claims 1 to 8, wherein ammonium sulphate in the solution is converted to ammonia gas and gypsum with lime.

10. The method according to any one of claims 1 to 9, wherein ammonia gas is converted to ammonium hydroxide by a known conventional ammonia absorption technique to be reused in the process.

11. The method according to any one of claims 1 to 10, wherein no additional magnesium hydroxide or ammonium hydroxide is added from outside except for compensating mechanical losses such as spillage etc.

12. Application of the method according to any one of claims 1 to 11 to ferric sulphate solutions which contain dissolved metals such as nickel and/or cobalt and/or zinc and/or copper and/or similar other metals that are normally soluble in sulphuric acid.

## Patentansprüche

1. Verfahren zur Rückgewinnung von Eisen aus Eisen(III)sulfatlösungen, erhalten aus einem Auslaugen von metalltragenden Materialien mit Schwefelsäure, um eine eisentragende Auslauglösung herzustellen, in der Form eines Oxids als ein geeignetes Produkt durch Ausfällung als Hydroxid, durch anschließende Druckoxidation und dann durch Kalzinieren des Eisenhydroxids.

2. Verfahren nach Anspruch 1, wobei ein pH-Wert der eisentragenden Laugenlösung anfänglich erhöht wird, insbesondere von einem Wert so niedrig wie 0,5 bis 1,8, durch Zugabe einer 10 - 15%igen Magnesiumhydroxidlösung zu der eisentragenden Lösung.

3. Verfahren nach Anspruch 2, wobei der pH-Wert der eisentragenden Lösung erhöht wird, in einer zweiten Stufe, insbesondere auf 3,5, durch Zugabe besagter eisentragender Lösung, bevorzugt mit einem pH-Wert von 1,8, in eine 10 - 15 %ige Magnesiumhydroxidlösung, insbesondere eines pH-Werts von 10,5, wobei diese schockartige pH-Werteinstellung eine gelartige Bildung von Eisenhydroxid eliminiert und eine Filtration erleichtert.

4. Verfahren nach einem der Ansprüche 1 bis 3, wobei Sulfate und andere metallische Werte, wie Nickel und Kobalt, die in dem Eisenhydroxidniederschlag verbleiben, durch Behandeln des Eisenhydroxidniederschlags in einem Druckbehälter in einer Slurryform entfernt werden, bevorzugt bei einem Druck von 2 - 3 bar und einer Temperatur von 120 - 135°C für eine kurze Dauer von 20 Minuten, während gerührt wird, optional gefolgt von einer Filtration und einem weiteren Waschen des Filterkuchens mit Wasser.

5. Verfahren nach einem der Ansprüche 1 bis 4, weiter umfassend ein Zufügen eines Flockungsmittels zu einem Produkt der Druckoxidation, um eine Filtration desselben zu erleichtern, insbesondere um eine Filtration der Slurry aus dem Druckbehälter nach Anspruch 4 zu erleichtern.

6. Verfahren nach einem der Ansprüche 1 bis 5, **dadurch gekennzeichnet, dass** es im Wesentlichen bei oder leicht oberhalb atmosphärischem Druck durchgeführt wird.

7. Verfahren nach einem der Ansprüche 1 bis 6, wobei metallische Werte, die in der Lösung enthalten sind, aus der Lösung bei ihren relevanten pH-Wertniveaus ausgefällt werden unter Verwendung von Ammoniumhydroxid als einem pH-Wertregulator.

8. Verfahren nach einem der Ansprüche 1 bis 7, wobei Magnesiumsulfat in der Lösung umgewandelt wird zu Magnesiumhydroxid, wobei Ammoniumhydroxid in dem Verfahren wiederverwendet wird.

9. Verfahren nach einem der Ansprüche 1 bis 8, wobei Ammoniumsulfat in der Lösung zu Ammoniakgas und Gips mit Kalk umgesetzt wird.

10. Verfahren nach einem der Ansprüche 1 bis 9, wobei Ammoniakgas durch eine bekannte herkömmliche Ammoniakabsorptionsmethode zu Ammoniumhydroxid umgewandelt wird, um in dem Verfahren wiederverwendet zu werden.

11. Verfahren nach einem der Ansprüche 1 bis 10, wobei kein zusätzliches Magnesiumhydroxid oder Ammoniumhydroxid von außerhalb zugegeben wird, außer zum Kompensieren mechanischer Verluste, wie Verschütten, etc.

12. Anwendung des Verfahrens nach einem der Ansprüche 1 bis 11 gegenüber Eisen(III)sulfatlösungen, die aufgelöste Metalle, wie Nickel und/oder Kobalt und/oder Zink und/oder Kupfer und/oder ähnliche andere Metalle enthalten, die normalerweise in Schwefelsäure löslich sind.

## Revendications

1. Procédé de récupération de fer à partir de solutions de sulfate ferrique, obtenues à l'issue de la lixiviation de matériaux contenant des métaux avec de l'acide sulfurique afin de produire une solution de lixiviation contenant du fer, sous forme d'un oxyde en tant que produit utile par précipitation à l'état d'hydroxyde, par oxydation sous pression subséquente, et ensuite par calcination de l'hydroxyde de fer.

2. Procédé selon la revendication 1, dans lequel un pH du fer contenant la solution de lixiviation est initialement augmenté, en particulier d'environ 0,5 à 1,8 seulement, par l'addition d'une solution de 10 à 15 % d'hydroxyde de magnésium à la solution contenant le fer.

3. Procédé selon la revendication 2, dans lequel le pH de la solution contenant du fer est augmenté, dans une seconde étape, en particulier de 3,5, par l'addition de ladite solution contenant du fer, préférablement avec un pH de 1,8, à une solution de 10 à 15 % d'hydroxyde de magnésium, en particulier d'un pH de 10,5, cet ajustement de choc du pH éliminant la formation en un type de gel de l'hydroxyde de fer et facilitant la filtration.

4. Procédé selon l'une quelconque des revendications 1 à 3, dans lequel les sulfates et d'autres valeurs métalliques telles que le nickel et le cobalt subsistant dans le précipité d'hydroxyde de fer sont éliminées en traitant le précipité d'hydroxyde de fer sous forme de suspension dans une cuve sous pression, préférablement à une pression de 2 à 3 bars et à une température de 120 à 135 °C pendant une durée de seulement 20 minutes sous agitation, ceci étant éventuellement suivi d'une filtration et d'un lavage supplémentaire du gâteau de filtration avec de l'eau.

5. Procédé selon l'une quelconque des revendications 1 à 4, comprenant en outre l'addition d'un floculant à un produit de ladite oxydation sous pression de manière à faciliter sa filtration, en particulier de manière à faciliter la filtration de la suspension depuis la cuve de pression selon la revendication 4.

6. Procédé selon l'une quelconque des revendications 1 à 5, **caractérisé en ce qu'**il est exécuté essentiellement à la pression atmosphérique ou légèrement au-dessus de celle-ci.

7. Procédé selon l'une quelconque des revendications 1 à 6, dans lequel les valeurs métalliques contenues dans la solution sont précipitées hors de la solution à leurs niveaux de pH appropriés en utilisant de l'hydroxyde d'ammonium comme régulateur de pH.

8. Procédé selon l'une quelconque des revendications 1 à 7, dans lequel le sulfate de magnésium dans la solution est converti en un hydroxyde de magnésium avec l'hydroxyde d'ammonium appelé à être réutilisé dans le processus.

9. Procédé selon l'une quelconque des revendications 1 à 8, dans lequel le sulfate d'ammonium dans la solution est converti en gaz ammoniac et en gypse avec de la chaux.

10. Procédé selon l'une quelconque des revendications 1 à 9, dans lequel le gaz ammoniac est converti en hydroxyde d'ammonium par une technique d'absorption de l'ammoniac classique connue en vue d'être réutilisé dans le processus.

11. Procédé selon l'une quelconque des revendications1 à 10, dans lequel aucun hydroxyde de magnésium ou hydroxyde d'ammonium supplémentaire n'est ajouté de l'extérieur pour compenser les pertes mécaniques telles que les épanchements etc.

12. Application du procédé selon l'une quelconque des revendications 1 à 11 à des solutions de sulfate ferrique qui contiennent des métaux dissous tels que du nickel et/ou du cobalt et/ou du zinc et/ou du cuivre et/ou d'autres métaux similaires qui sont normalement solubles dans l'acide sulfurique.
